# EUROPÄISCHE PATENTSCHRIFT

(11) **EP 3 264 042 B1**
(45) Veröffentlichungstag und Bekanntmachung des Hinweises auf die Patenterteilung: **06.01.2021**
(21) Anmeldenummer: 17169415.1
(22) Anmeldetag: 04.05.2017
(51) Int. Cl.: G01C 21/30, G01S 19/51, G06K 9/00, G08G 1/16, G01S 5/00, G01S 19/42, G08G 1/005, G08G 1/0967, H04W 4/02, H04W 4/024, H04W 4/029, H04W 4/46

(54) **VERFAHREN UND SYSTEM ZUR LOKALISIERUNG VON KRAFTFAHRZEUGEN IN GEBÄUDEN BEI VERDECKUNG VON LANDMARKEN**
METHOD AND SYSTEM FOR LOCATING MOTOR VEHICLES IN BUILDINGS WHEN CONCEALING LANDMARKS
PROCÉDÉ ET SYSTÈME DE LOCALISATION DE VÉHICULES AUTOMOBILES DANS DES BÂTIMENTS EN CAS DE MASQUAGE DE POINTS DE REPÈRE

(30) Priorität: 28.06.2016 DE 102016211620
(43) Veröffentlichungstag der Anmeldung: 03.01.2018
(73) Patentinhaber: Robert Bosch GmbH, 70442 Stuttgart (DE)
(72) Erfinder: ROHDE, Jan, 70192 Stuttgart (DE); BANZHAF, Holger Andreas, 89150 Laichingen (DE)

(56) Entgegenhaltungen:
- DE-A1-102010 023 603
- DE-A1-102013 014 869

## Beschreibung

### Stand der Technik

Die Erfindung betrifft ein Verfahren, ein Fahrerassistenzsystem und ein das Fahrerassistenzsystem umfassendes System zur Lokalisierung eines ersten Kraftfahrzeugs auf einer digitalen Karte bei dem eine zur Lokalisierung vorgesehene Landmarke für das erste Kraftfahrzeug zur Detektion verdeckt ist.

Aus der DE 10 2013 014 869 A1 ist ein Verfahren zur Positionsbestimmung eines Kraftfahrzeugs auf Basis von Satellitendaten und eines ermittelten Korrekturfaktors bekannt. Dabei erfassen Fahrzeuge Landmarken, deren Position bekannt ist und errechnen daraus einen Korrekturfaktor für die Satellitensignale. Es ist dabei auch beschrieben, dass ein zweites Kraftfahrzeug, welches eine Landmarke nicht erfassen kann, den Korrekturfaktor von einem anderen Kraftfahrzeug erfassen kann.

Das Dokument DE 10 2010 023603 A1 beschreibt ein Verfahren zum Übermitteln und Verarbeiten von Informationen. Hierbei wird ein Objekt im Umfeld eines ersten Fahrzeugs ermittelt und dessen Position relativ zu dem ersten Fahrzeug ermittelt. Außerdem wird das Objekt klassifiziert und eine Relevanz des Objekts in Abhängigkeit der Klassifizierung ermittelt. Die Position und die Form des relevanten Objekts wird daraufhin an ein zweites Fahrzeug gesendet, welches beispielsweise die Position und die Form des relevanten Objekts in Bezug auf das zweite Fahrzeug umrechnet. Daraus wird ein Gefährdungspotential des Objekts in Bezug auf das zweite Fahrzeug ermittelt.

Satellitensignale, wie beispielsweise GPS-Signale sind jedoch in Gebäuden, wie beispielsweise Parkhäusern, oft nicht zu empfangen. Zusätzlich ist die Lokalisierung mittels Satellitensignalen oft zu ungenau.

### Offenbarung der Erfindung

Um diesem Problem zu begegnen, werden erfindungsgemäß ein Verfahren, ein Fahrerassistenzsystem, welches das Verfahren ausführt und ein das Fahrerassistenzsystem umfassendes System zur Lokalisierung eines ersten Kraftfahrzeugs auf einer digitalen Karte vorgeschlagen.

Bei dem Verfahren zur Lokalisierung eines ersten Kraftfahrzeugs auf einer digitalen Karte bei dem eine zur Lokalisierung vorgesehene Landmarke für das erste Kraftfahrzeug zur Detektion verdeckt ist, detektiert das erste Kraftfahrzeug ein zweites auf der Karte lokalisiertes, stehendes Kraftfahrzeug und verwendet dieses zur Lokalisierung auf der digitalen Karte. Bei diesem Verfahren wird also eine Lokalisierung durch den Abgleich der durch das Fahrzeug erfassen Umwelt mit einer bekannten digitalen Karte durchgeführt. Zu sogenannten Verdeckungseffekten, bei dem eine zur Lokalisierung vorgesehene Landmarke für ein Kraftfahrzeug zur Detektion verdeckt ist, kann es beispielsweise auf großen Parkplätzen kommen. Dort können stehende, sich also nicht bewegende Kraftfahrzeuge manche Landmarken verdecken und es sind für die sich lokalisierenden Kraftfahrzeuge oft nur die stehenden Kraftfahrzeuge zu detektieren. Aber auch in anderen Situationen, wie beispielsweise in Verkehrsstaus oder an roten Ampeln kann es zu diesen sogenannten Verdeckungseffekten kommen, bei denen ein stehendes, sich also nicht bewegendes Kraftfahrzeug, eine Landmarke verdeckt und andere Kraftfahrzeuge die Landmarke deshalb nicht detektieren können. Durch Verwendung des stehenden Kraftfahrzeugs zur Lokalisierung kann das Fahrzeug trotz Auftretens des Verdeckungseffekts auf der digitalen Karte lokalisiert werden.

Das zweite stehende Kraftfahrzeug wird mittels Detektion der Landmarke auf der digitalen Karte lokalisiert. Dem zweiten stehenden Kraftfahrzeug ist die zur Lokalisierung vorgesehene Landmarke nicht zur Detektion verdeckt und es kann sie zur Lokalisierung verwenden. Die Lokalisierungsgenauigkeit wird damit erhöht.

Bevorzugt repräsentiert die Landmarke ein drittes auf der Karte lokalisiertes stehendes Kraftfahrzeug. Dies bietet den Vorteil, dass kaum mehr statische Objekte, wie beispielsweise Straßenlaternen in der Infrastruktur vorgesehen sein müssen. Die Lokalisierung kann mittels stehender Kraftfahrzeuge durchgeführt werden. Alternativ repräsentiert die Landmarke ein auf der Karte lokalisiertes statisches Objekt. Die Positionen dieser statischen Objekte, wie beispielsweise Straßenlaternen sind fest in der digitalen Karte eingespeichert und ermöglichen als Landmarken deshalb eine sehr hohe Lokalisierungsgenauigkeit.

Das zweite Kraftfahrzeug übermittelt eine Information über seine Position an das erste Kraftfahrzeug. Diese sogenannte Car-to-Car Kommunikation ermöglicht eine Lokalisierung in Gebäuden, bei dem andere Ortungsverfahren wie beispielsweise GPS oft nicht verfügbar sind. Diese Information ist eine Information über die Position des zweiten stehenden Kraftfahrzeugs relativ zu der Landmarke. Dies bietet den Vorteil, dass das erste Kraftfahrzeug seine Position relativ zu der Landmarke trotz Verdeckung ermitteln kann.

Bevorzugt repräsentieren das erste Kraftfahrzeug und das zweite Kraftfahrzeug hintereinander und seitlich zueinander parkende Kraftfahrzeuge. In dieser Situation kommt es häufig zu dem sogenannten Verdeckungseffekt, da die parkenden Kraftfahrzeuge sich einander die "Sicht" auf einer in der Infrastruktur vorgesehenen Landmarke nehmen.

Jedes weitere Kraftfahrzeug für das die Landmarke zur Detektion verdeckt ist, verwendet vorzugsweise ein schon lokalisiertes stehendes Kraftfahrzeug zur Lokalisierung. Dies bietet den Vorteil, dass nur noch eine statische Landmarke in der Umgebung angebracht und fest auf der digitalen Karte lokalisiert werden muss, um ein ganzes Cluster von Kraftfahrzeugen zu lokalisieren. Die Lokalisierung kann hauptsächlich mittels stehender Kraftfahrzeuge durchgeführt werden.

Die Erfindung umfasst zudem ein erstes Fahrerassistenzsystem, welches das Verfahren zur Lokalisierung eines ersten Kraftfahrzeugs auf einer digitalen Karte, bei dem eine zur Lokalisierung vorgesehene Landmarke für das erste Kraftfahrzeug zur Detektion verdeckt ist, ausführt. Das erste Fahrerassistenzsystem umfasst eine erste Steuereinheit und eine erste Recheneinheit. Die erste Steuereinheit ist dazu ausgebildet, ein erstes Erkennungssignal einzulesen und mittels des Erkennungssignals zumindest einen ersten Detektionsalgorithmus zu aktivieren. Die erste Recheneinheit ist dazu ausgebildet, mittels des ersten Detektionsalgorithmus die Position eines zweiten Kraftfahrzeugs relativ zu dem ersten Kraftfahrzeug zu detektieren. Die erste Steuereinheit verwendet das zweite detektierte stehende Kraftfahrzeug zur Lokalisierung des ersten Kraftfahrzeugs auf der digitalen Karte.

Zusätzlich umfasst die Erfindung ein System, welches ein erstes Kraftfahrzeug mit dem ersten Fahrerassistenzsystem und ein zweites, stehendes Kraftfahrzeug mit einem zweiten Fahrerassistenzsystem umfasst. Das zweite Fahrerassistenzsystem umfasst eine zweite Steuereinheit, sowie eine zweite Recheneinheit. Die zweite Steuereinheit ist dazu ausgebildet, ein zweites Erkennungssignal einzulesen und mittels des Erkennungssignals zumindest einen zweiten Detektionsalgorithmus zu aktivieren. Die zweite Recheneinheit ist dazu ausgebildet mittels des zweiten Detektionsalgorithmus eine für eine Umfelderfassungseinrichtung des zweiten Kraftfahrzeugs erfassbare Landmarke zu detektieren. Die zweite Steuereinheit verwendet die detektierte Landmarke zur Lokalisierung des zweiten Kraftfahrzeugs auf der digitalen Karte.

### Kurze Beschreibung der Zeichnungen

Figur 1 zeigt das erfindungsgemäße erste Fahrerassistenzsystem.
Figur 2a zeigt einen Verfahrensablauf gemäß einer ersten Ausführungsform der Erfindung zur Lokalisierung eines ersten Kraftfahrzeugs auf einer digitalen Karte bei dem eine zur Lokalisierung vorgesehene Landmarke für das erste Kraftfahrzeug zur Detektion verdeckt ist.
Figur 2b zeigt einen Verfahrensablauf gemäß einer zweiten Ausführungsform der Erfindung zur Lokalisierung eines ersten Kraftfahrzeugs auf einer digitalen Karte bei dem eine zur Lokalisierung vorgesehene Landmarke für das erste Kraftfahrzeug zur Detektion verdeckt ist.
Figur 3 zeigt schematisch eine Draufsicht auf eine Situation, bei dem Kraftfahrzeuge, für die die Landmarke zur Detektion verdeckt ist, ein schon lokalisiertes parkendes Kraftfahrzeug zur Lokalisierung verwendet.

### Ausführungsbeispiele

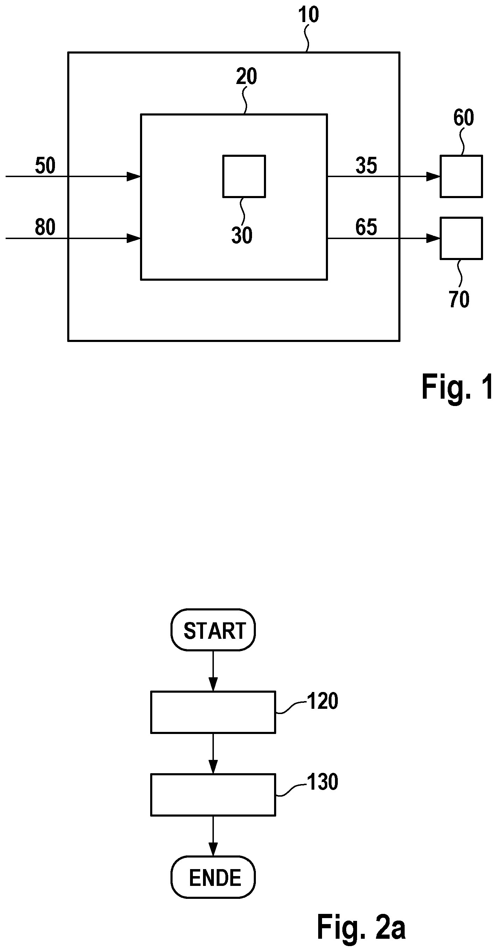

Auf Figur 1 ist ein Ausführungsbeispiel für ein erfindungsgemäß ausgebildetes erstes Fahrerassistenzsystem 10 zur Lokalisierung eines ersten Kraftfahrzeugs schematisch gezeigt, wobei dem ersten Kraftfahrzeug eine zur Lokalisierung vorgesehene Landmarke zur Detektion verdeckt ist.

Das erste Fahrerassistenzsystem 10 umfasst eine erste Steuereinheit 20 und eine erste Recheneinheit 30, welche in diesem Beispiel in die erste Steuereinheit 20 integriert ist. Die erste Steuereinheit 20 ist dazu ausgebildet ein erstes Erkennungssignal 50 einzulesen. Ein Erkennungssignal kann beispielsweise das erfasste Signal einer Umfelderkennungseinheit des ersten Kraftfahrzeugs repräsentieren. Die erste Steuereinheit 20 ist außerdem dazu ausgebildet, mittels des eingelesenen Erkennungssignals zumindest einen ersten Detektionsalgorithmus zu aktivieren. Die erste Recheneinheit 30 ist dazu ausgebildet, mittels des Detektionsalgorithmus ein zweites auf der digitalen Karte lokalisiertes stehendes Kraftfahrzeug zu detektieren. Die Steuereinheit 20 ist wiederum dazu ausgebildet, das zweite detektierte stehende Kraftfahrzeug zur Lokalisierung des ersten Kraftfahrzeugs auf der digitalen Karte zu verwenden. Erfindungsgemäß ist die erste Steuereinheit 20 dazu ausgebildet, eine Information über seine Position relativ zu der Landmarke zu empfangen. Optional ist die erste Steuereinheit 20 dazu ausgebildet, eine Information über den lokalisierten Standort des 55 ersten Kraftfahrzeugs an eine Anzeigeeinrichtung 60 zu übertragen. Bei dieser Anzeigeeinrichtung kann es sich beispielsweise um den Bildschirm eines Navigationsgeräts des Kraftfahrzeugs handeln. Optional kann es sich dabei auch um eine mobile Anzeigeeinrichtung, wie beispielsweise ein Smartphone handeln. Erfindungsgemäßist die erste Steuereinheit 20 dazu ausgebildet, eine Information über die Position des ersten Kraftfahrzeugs relativ zu der zur Lokalisierung vorgesehenen Landmarke, an die weitere Steuereinheit 70 eines weiteren Fahrerassistenzsystems zu übertragen.

Figur 2a zeigt einen Vertahrensablaut zur Lokalisierung eines ersten Kraftfahrzeugs auf einer digitalen Karte.

Gemäß Figur 2a wird in einem mit "START" dargestellten Verfahrensschritt das Verfahren gestartet. In Verfahrensschritt 120 wird ein zweites auf der Karte lokalisiertes, stehendes Kraftfahrzeug durch das erste Kraftfahrzeug detektiert. In Verfahrensschritt 130 wird das erste Kraftfahrzeug, für das eine zur Lokalisierung vorgesehene Landmarke verdeckt ist, durch Verwendung des zweiten Kraftfahrzeugs auf der digitalen Karte lokalisiert. Das Verfahren wird daraufhin in einem mit "ENDE" dargestellten Verfahrensschritt beendet.

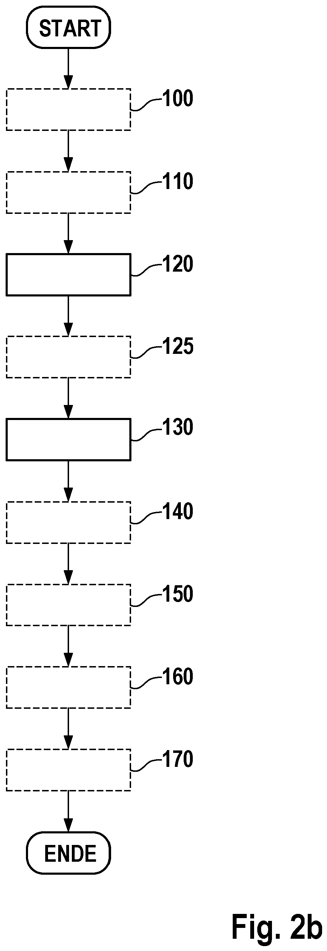

Im Verfahren gemäß Figur 2b wird im Unterschied zum in Figur 2a dargestellten Verfahren in Verfahrensschritt 100 eine Landmarke durch das zweite stehende Kraftfahrzeug detektiert. In Verfahrensschritt 110 wird das zweite Kraftfahrzeug mittels der detektierten Landmarke auf der digitalen Karte lokalisiert. Im erfindungsgemäßen Verfahrensschritt 125 übermittelt das zweite Kraftfahrzeug nach seiner Detektion durch das erste Kraftfahrzeug eine Information über seine Position zu der Landmarke an das erste Kraftfahrzeug. Im optionalen Verfahrensschritt 140 bleibt das erste, nun lokalisierte Kraftfahrzeug ebenfalls stehen. Im darauffolgenden optionalen Verfahrensschritt 150 wird das stehende, erste Kraftfahrzeug von einem weiteren Kraftfahrzeug detektiert, für das die zur Lokalisierung vorgesehene Landmarke ebenfalls verdeckt ist. Im folgenden Verfahrensschritt 160 übermittelt das stehende, erste Kraftfahrzeug eine Information über seine Position, insbesondere über seine Position relativ zu der Landmarke, an das weitere Kraftfahrzeug. Im anschließenden optionalen Verfahrensschritt 170 wird das weitere Kraftfahrzeug, für das eine zur Lokalisierung vorgesehene Landmarke verdeckt ist, durch Verwendung des ersten Kraftfahrzeugs auf der digitalen Karte lokalisiert. Das Verfahren wird daraufhin in einem mit "ENDE" dargestellten Verfahrensschritt beendet.

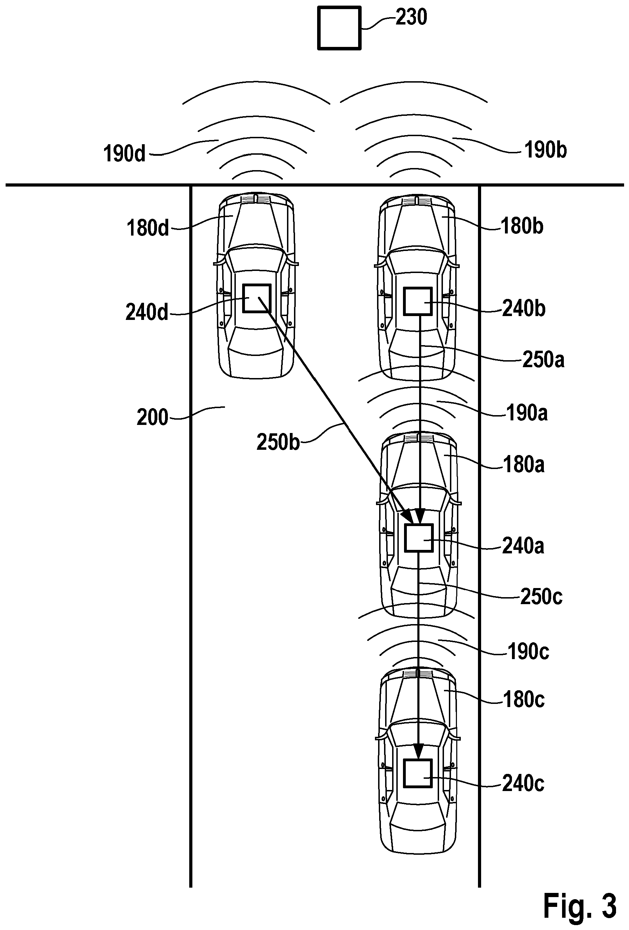

Figur 3 zeigt schematisch eine Draufsicht auf eine Situation mit hintereinander und seitlich zueinander parkenden Kraftfahrzeuge, wobei schon lokalisierte Kraftfahrzeuge von anderen Kraftfahrzeugen zur Lokalisierung verwendet werden.

Das zweite stehende Kraftfahrzeug 180b und das weitere zweite stehende Kraftfahrzeug 180d parken auf dem Parkplatz 200 und können beispielsweise anhand ausgesendeter Signalwellen 190d und 190b, welche durch in dieser Figur 3 nicht dargestellten Umfelderfassungseinheiten, wie z.B. Ultraschallsensoren erzeugt werden, die zur Lokalisierung vorgesehene Landmarke 230 erfassen. Mittels des zweiten Fahrerassistenzsystems 240b und dessen in dieser Figur nicht dargestellten zweiten Steuereinheit und zweiten Recheneinheit ist es dem zweiten Kraftfahrzeug 180b möglich, die Landmarke zu detektieren und zur Lokalisierung des zweiten Kraftfahrzeugs 180b auf der digitalen Karte zu verwenden. Ebenfalls kann das weitere stehende Kraftfahrzeug 180d die Landmarke 230 mittels dessen weiteren zweiten Fahrerassistenzsystems 240d und dessen in dieser Figur nicht dargestellten weiteren zweiten Steuereinheit und zweiten Recheneinheit zur Lokalisierung auf der digitalen Karte verwenden. Das erste Kraftfahrzeug 180a parkt auf Figur 3 hinter dem zweiten Kraftfahrzeug 180b. Es kann anhand ausgesendeter Signalwellen 190a, die von einer in dieser Figur 3 nicht dargestellten Umfelderfassungseinheit des ersten Kraftfahrzeugs 180b erzeugt werden, das zweite Kraftfahrzeug 180b, sowie das weitere zweite Kraftfahrzeug 180d erfassen. Mittels des ersten Fahrerassistenzsystems 240a und dessen in dieser Figur nicht dargestellten ersten Steuereinheit und ersten Recheneinheit ist es dem ersten Kraftfahrzeug 180a möglich, das zweite Kraftfahrzeug 180b oder/und das weitere zweite Kraftfahrzeug 180d zu detektieren. Das erste Fahrerassistenzsystem 240a und die dort integrierte, in dieser Figur 3 nicht dargestellte erste Steuereinheit, empfangen über die erste Datenverbindung 250a eine Information über die Position zweiten stehenden Kraftfahrzeugs 180b relativ zu der Landmarke 230. Das erste Kraftfahrzeug 180a kann somit das zweite stehende Kraftfahrzeug 180b zur Lokalisierung auf der digitalen Karte verwenden. Ebenso empfängt das erste Fahrerassistenzsystem 240a über die zweite Datenverbindung 250b eine Information über die Position weiteren zweiten stehenden Kraftfahrzeugs 180d, insbesondere über seine Position relativ zu der Landmarke 230. Das erste Kraftfahrzeug 180b kann somit ebenfalls das weitere zweite stehende Kraftfahrzeug 180d zur Lokalisierung auf der digitalen Karte zu verwenden. Durch Verwendung beider detektierten Kraftfahrzeuge zur Lokalisierung kann sich eine höhere Lokalisierungsgenauigkeit des ersten Kraftfahrzeugs 180a ergeben, da eventuelle Lokalisierungsungenauigkeiten des zweiten Kraftfahrzeugs 180b oder des weiteren zweiten Kraftfahrzeugs 180d hiermit ausgeglichen werden können. Das dritte Kraftfahrzeug 180c erfasst anhand Signalwellen 190c, die durch eine in dieser Figur 3 nicht dargestellten Umfelderfassungseinheit erzeugt werden, das erste Kraftfahrzeug 180a. Mittels des dritten Fahrerassistenzsystems 240c und dessen in dieser Figur nicht dargestellten dritten Steuereinheit und dritten Recheneinheit ist es dem dritten Kraftfahrzeug 180c möglich, das erste Kraftfahrzeug 180a zu detektieren. Das dritte Fahrerassistenzsystem 240c und die dort integrierte, in dieser Figur 3 nicht dargestellte erste Steuereinheit, empfangen über die dritte Datenverbindung 250c eine Information über die Position ersten stehenden Kraftfahrzeugs 180a, insbesondere über dessen Position relativ zu der Landmarke 230. Das dritte Kraftfahrzeug 180c kann somit das erste stehende Kraftfahrzeug 180a zur Lokalisierung auf der digitalen Karte zu verwenden.

Wie Figur 3 zeigt, kann anhand nur einer in der Infrastruktur vorgesehenen Landmarke 230 ein ganzes Cluster von parkenden Kraftfahrzeugen lokalisiert werden.

Bei den in den obigen Ausführungsbeispielen beschriebenen Kraftfahrzeugen 180a, 180b, 180c und 180d kann es sich um automatisch betriebene Kraftfahrzeuge handeln. Beim autonomen Fahren ist das Detektieren von auf einer digitalen Karte lokalisierten Landmarken eine Möglichkeit für das Kraftfahrzeug, sich zu lokalisieren.

Bei den Signalwellen 190a, 190b, 190c und 190d kann es sich um Ultraschallwellen handeln.

## Patentansprüche

1. Verfahren zur Lokalisierung (130) eines ersten Kraftfahrzeugs (180a) auf einer digitalen Karte, bei dem eine zur Lokalisierung vorgesehene Landmarke (230) für das erste Kraftfahrzeug (180a) zur Detektion verdeckt ist, wobei das erste Kraftfahrzeug (180a) ein zweites auf der Karte lokalisiertes, stehendes Kraftfahrzeug (180b, 180d) detektiert (120) und zur Lokalisierung (130) auf der Karte verwendet, wobei das zweite Kraftfahrzeug (10b, 180d) eine Information über seine Position relativ zu der Landmarke (230), an das erste Kraftfahrzeug (180a) übermittelt (125).

2. Verfahren nach Anspruch 1, **dadurch gekennzeichnet, dass** das zweite stehende Kraftfahrzeug (180b, 180d) mittels Detektion (100) der Landmarke (230) auf der digitalen Karte lokalisiert (110) wird.

3. Verfahren nach Anspruch 1 oder 2, **dadurch gekennzeichnet, dass** die Landmarke (230)
- ein drittes auf der Karte lokalisiertes stehendes Kraftfahrzeug oder
- ein auf der Karte lokalisiertes statisches Objekt
repräsentiert.

4. Verfahren nach einem der Ansprüche 1 bis 3, **dadurch gekennzeichnet, dass** das erste Kraftfahrzeug (180a) und das zweite Kraftfahrzeug (180b, 180d) hintereinander und seitlich zueinander parkende Kraftfahrzeuge repräsentieren.

5. Verfahren nach einem der Ansprüche 1 bis 4, **dadurch gekennzeichnet, dass** jedes weitere Kraftfahrzeug für das die Landmarke (230) zur Detektion verdeckt ist, ein schon lokalisiertes stehendes Kraftfahrzeug zur Lokalisierung verwendet.

6. Erstes Fahrerassistenzsystem (240a) zur Lokalisierung (130) eines ersten Kraftfahrzeugs (180a) auf einer digitalen Karte, bei dem eine zur Lokalisierung vorgesehene Landmarke (230) für das erste Kraftfahrzeug (180a) zur Detektion verdeckt ist, ausgebildet zur Ausführung eines Verfahrens nach einem der Ansprüche 1 bis 5, wenigstens umfassend:
- eine erste Steuereinheit (20), die dazu ausgebildet ist, ein erstes Erkennungssignal (50) einzulesen und mittels des ersten Erkennungssignals (50) zumindest ein ersten Detektionsalgorithmus zu aktivieren,
- eine erste Recheneinheit (30), die dazu ausgebildet ist, mittels des ersten Detektionsalgorithmus ein zweites auf der digitalen Karte lokalisiertes stehendes Kraftfahrzeug (180b, 180d) zu detektieren,
wobei die erste Steuereinheit (20) dazu ausgebildet ist, das zweite detektierte stehende Kraftfahrzeug (180b, 180d) zur Lokalisierung (130) des ersten Kraftfahrzeugs (180a) auf der digitalen Karte zu verwenden,
wobei die erste Steuereinheit (20) dazu ausgebildet ist, eine Information über die Position des zweiten stehenden Kraftfahrzeugs (180b, 180d) relativ zu der Landmarke (230) zu empfangen.

7. System zur Ausführung eines Verfahrens nach einem der Ansprüche 1 bis 5, wenigstens umfassend:
- Ein erstes Kraftfahrzeug (180a) mit einem ersten Fahrerassistenzsystem (10, 240a) nach Anspruch 7 oder 8, und
- ein zweites, stehendes Kraftfahrzeug (180b, 180d) mit einem zweiten Fahrerassistenzsystem (240b, 240d), wobei das zweite Fahrerassistenzsystem (240b, 240d) umfasst
- eine zweite Steuereinheit, die dazu ausgebildet ist, ein zweites Erkennungssignal einzulesen und mittels des Erkennungssignals zumindest ein zweiten Detektionsalgorithmus zu aktivieren,
- eine zweite Recheneinheit, die dazu ausgebildet ist, mittels des zweiten Detektionsalgorithmus eine für eine Umfelderfassungseinrichtung des zweiten Kraftfahrzeugs erfassbare Landmarke (230) zu detektieren, wobei die zweite Steuereinheit dazu ausgebildet ist, die detektierte Landmarke (230) zur Lokalisierung (110) des zweiten stehenden Kraftfahrzeugs (240b, 240d) auf der digitalen Karte zu verwenden.

8. System nach Anspruch 7, **dadurch gekennzeichnet, dass** die zweite Steuereinheit dazu ausgebildet ist, eine Information über die Position des zweiten Kraftfahrzeugs (180b, 180d), insbesondere über die Position des zweiten Kraftfahrzeugs relativ zu der Landmarke (230), an die erste Steuereinheit des ersten Fahrerassistenzsystems zu übermitteln.

## Claims

1. Method for locating (130) a first motor vehicle (180a) on a digital map, in which a landmark (230) which is provided for the locating process is concealed with respect to detection by the first motor vehicle (180a), wherein the first motor vehicle (180a) detects (120) a second stationary motor vehicle (180b, 180d) located on the map, and uses it for the locating process (130) on the map, wherein the second motor vehicle (10b, 180d) transfers (125) information about its position relative to the landmark (230) to the first motor vehicle (180a).

2. Method according to Claim 1, **characterized in that** the second stationary motor vehicle (180b, 180d) is located (110) on the digital map by detecting (100) the landmark (230).

3. Method according to Claim 1 or 2, **characterized in that** the landmark (230) represents
- a third stationary motor vehicle located on the map or
- a static object located on the map.

4. Method according to one of Claims 1 to 3, **characterized in that** the first motor vehicle (180a) and the second motor vehicle (180b, 180d) represent motor vehicles which are parked one behind the other and to the side of one another.

5. Method according to one of Claims 1 to 4, **characterized in that** each further motor vehicle for which the landmark (230) is concealed with respect to detection uses an already located stationary motor vehicle for the locating process.

6. First driver assistance system (240a) for locating (130) a first motor vehicle (180a) on a digital map, in which a landmark (230) which is provided for the locating process for the first motor vehicle (180a) is concealed for the detection, designed to carry out a method according to one of Claims 1 to 5, at least comprising:
- a first control unit (20) which is designed to read in a first detection signal (50) and activate at least a first detection algorithm by means of the first detection signal (50),
- a first computing unit (30) which is designed to detect, by means of the first detection algorithm, a second stationary motor vehicle (180b, 180d) which is located on the digital map,
wherein the first control unit (20) is designed to use the second detected stationary motor vehicle (180b, 180d) to locate (130) the first motor vehicle (180a) on the digital map, wherein the first control unit (20) is designed to receive information about the position of the second stationary motor vehicle (180b, 180d) relative to the landmark (230).

7. System for carrying out a method according to one of Claims 1 to 5, at least comprising:
- a first motor vehicle (180a) with a first driver assistance system (10, 240a) according to Claim 7 or 8, and
- a second stationary motor vehicle (180b, 180d) with a second driver assistance system (240b, 240d), wherein the second driver assistance system (240b, 240d) comprises
- a second control unit which is designed to read in a second detection signal and to activate at least one second detection algorithm by means of the detection signal,
- a second computing unit which is designed to detect, by means of the second detection algorithm, a landmark (230) which can be sensed by a surroundings-sensing device of the second motor vehicle,
wherein the second control unit is designed to use the detected landmark (230) to locate (110) the second stationary motor vehicle (240b, 240d) on the digital map.

8. System according to Claim 7, **characterized in that** the second control unit is designed to transfer information about the position of the second motor vehicle (180b, 180d), in particular about the position of the second motor vehicle relative to the landmark (230), to the first control unit of the first driver assistance system.

## Revendications

1. Procédé de localisation (130) d'un premier véhicule automobile (180a) sur une carte numérique, procédé dans lequel un repère (230) prévu pour la localisation du premier véhicule automobile (180a) est couvert pour la détection, le premier véhicule automobile (180a) détectant (120) un deuxième véhicule automobile immobile (180b, 180d) situé sur la carte et l'utilisant pour la localisation (130) sur la carte, le deuxième véhicule automobile (10b, 180d) transmettant (125) au premier véhicule automobile (180a) une information sur sa position par rapport au repère (230) .

2. Procédé selon la revendication 1, **caractérisé en ce que** le deuxième véhicule automobile immobile (180b, 180d) est localisé (110) par détection (100) du repère (230) sur la carte numérique.

3. Procédé selon la revendication 1 ou 2, **caractérisé en ce que** le repère (230) représente
- un troisième véhicule automobile immobile localisé sur la carte ou
- un objet statique localisé sur la carte.

4. Procédé selon l'une des revendications 1 à 3, **caractérisé en ce que** le premier véhicule automobile (180a) et le deuxième véhicule automobile (180b, 180d) représentent des véhicules automobiles en stationnement l'un derrière l'autre et latéralement l'un par rapport à l'autre.

5. Procédé selon l'une des revendications 1 à 4, **caractérisé en ce que** tout autre véhicule automobile, pour lequel le repère (230) est couvert pour la détection, utilise pour la localisation un véhicule automobile immobile déjà localisé.

6. Premier système d'aide à la conduite (240a) qui est destiné à localiser (130) un premier véhicule automobile (180a) sur une carte numérique et dans lequel un repère (230) prévu pour la localisation du premier véhicule automobile (180a) est couvert pour la détection, ledit premier système étant conçu pour mettre en œuvre un procédé selon l'une des revendications 1 à 5 et comprenant au moins :
- une première unité de commande (20) qui est conçue pour lire un premier signal d'identification (50) et activer au moins un premier algorithme de détection au moyen du premier signal d'identification (50),
- une première unité de calcul (30) qui est conçue pour détecter, au moyen du premier algorithme de détection, un deuxième véhicule automobile immobile (180b, 180d) localisé sur la carte numérique,
la première unité de commande (20) étant conçue pour utiliser le deuxième véhicule automobile immobile détecté (180b, 180d) pour localiser (130) le premier véhicule automobile (180a) sur la carte numérique,
la première unité de commande (20) étant conçue pour recevoir une information sur la position du deuxième véhicule automobile immobile (180b, 180d) par rapport au repère (230).

7. Système destiné à mettre en œuvre un procédé selon l'une des revendications 1 à 5, ledit système comprenant au moins :
- un premier véhicule automobile (180a) équipé d'un premier système d'aide à la conduite (10, 240a) selon la revendication 7 ou 8, et
- un deuxième véhicule automobile immobile (180b, 180d) équipé d'un deuxième système d'aide à la conduite (240b, 240d), le deuxième système d'aide à la conduite (240b, 240d) comprenant
- une deuxième unité de commande qui est conçue pour lire un deuxième signal d'identification et pour activer au moins un deuxième algorithme de détection au moyen du signal d'identification,
- une deuxième unité de calcul conçue pour détecter, au moyen du deuxième algorithme de détection, un repère (230) qui peut être détecté par un dispositif de détection d'environnement du deuxième véhicule automobile,
la deuxième unité de commande étant conçue pour utiliser le repère détecté (230) afin de localiser (110) le deuxième véhicule automobile immobile (240b, 240d) sur la carte numérique.

8. Système selon la revendication 7, **caractérisé en ce que** la deuxième unité de commande est destinée à transmettre une information sur la position du deuxième véhicule automobile (180b, 180d), notamment sur la position du deuxième véhicule automobile par rapport au repère (230), à la première unité de commande du premier système d'aide à la conduite.
